# EUROPEAN PATENT APPLICATION

(11) **EP 4 797 458 A1**
(43) Date of publication of application: **26.08.2026**
(21) Application number: 24893227.9
(22) Date of filing: 04.11.2024
(51) Int. Cl.: H01R 13/02

(54) **RADIO FREQUENCY TRANSMISSION OPTICAL MODULE, INTERFACE, AND COMMUNICATION DEVICE**

(30) Priority: 24.11.2023 CN 202311605967
(71) Applicant: HUAWEI TECHNOLOGIES CO., LTD., Shenzhen 518129 (CN)
(72) Inventor: LIU, Hao, Shenzhen, Guangdong 518129 (CN); ZHANG, Yuanhong, Shenzhen, Guangdong 518129 (CN); LI, Jiangnan, Shenzhen, Guangdong 518129 (CN); SANG, Youbao, Shenzhen, Guangdong 518129 (CN); BAI, Chunxu, Shenzhen, Guangdong 518129 (CN)
(74) Representative: MERH-IP Matias Erny Reichl Hoffmann Patentanwälte PartG mbB
(86) International application number: PCT/CN2024/129704
(87) International publication number: WO 2025/108069

(57) **Abstract**

Embodiments of this application relate to the field of communication technologies, and provide a radio frequency transmission optical module, an interface, and a communication device, to alleviate a problem that a gold finger connector of an optical module for transmitting an analog signal may be mis-inserted into an interface of an optical module for transmitting a digital signal. The radio frequency transmission optical module includes a housing and a gold finger connector disposed in the housing. The gold finger connector is configured to connect to an interface. The gold finger connector includes a substrate. The substrate includes a substrate body and a first protruding portion. The substrate body includes a first side surface. The first protruding portion is connected to the first side surface. Providing the first protruding portion effectively increases a width of the gold finger connector, so that the width of the gold finger connector is greater than a width of an interface of an optical module for transmitting a digital signal. When the gold finger connector is mis-inserted into the interface of the optical module for transmitting the digital signal, insertion is prevented due to blocking by the first protruding portion, thereby avoiding mis-insertion of gold finger connectors of optical modules of different signal types.

## Description

This application claims priority to Chinese Patent Application No. 202311605967.8, filed with the China National Intellectual Property Administration on November 24, 2023 and entitled "RADIO FREQUENCY TRANSMISSION OPTICAL MODULE, INTERFACE, AND COMMUNICATION DEVICE", which is incorporated herein by reference in its entirety.

### TECHNICAL FIELD

This application relates to the field of communication technologies, and specifically, to a radio frequency transmission optical module, an interface, and a communication device.

### BACKGROUND

A pluggable optical module apparatus is mainly used in an optical-to-electrical conversion transmission apparatus. An optical module converts an optical signal into an electrical signal, and then transmits the electrical signal to a circuit board of a device through a connector, thereby implementing optical-to-electrical conversion. In practice, the pluggable optical module apparatus includes an optical module, a connector, a PCB, and a pull-tab panel that cooperate with each other to implement installation and fastening of each component, ensuring reliability of signal transmission.

In actual use cases, an optical module for transmitting an analog signal is co-located with an optical module for transmitting a digital signal. Because connectors of the two types of optical modules are of the same size, and the optical modules also have same cage dimensions, there is a risk of mis-insertion.

### SUMMARY

Embodiments of this application provide a radio frequency transmission optical module, an interface matching the radio frequency transmission optical module, and a communication device, to alleviate a problem that a gold finger connector of a radio frequency transmission optical module for transmitting an analog signal may be mis-inserted into an interface of an optical module for transmitting a digital signal.

According to a first aspect, an embodiment of this application provides a radio frequency transmission optical module. The radio frequency transmission optical module includes a housing and a gold finger connector disposed in the housing. The gold finger connector is configured to connect to an interface. The gold finger connector includes a substrate. The substrate includes a substrate body and a first protruding portion. The substrate body includes a first side surface. The first protruding portion is connected to the first side surface.

According to the radio frequency transmission optical module provided in this embodiment of this application, the gold finger connector of the radio frequency transmission optical module is provided with the first protruding portion on the first side surface of the substrate body, which effectively increases a width of the gold finger connector, so that the width of the gold finger connector is greater than a width of an interface of an optical module for transmitting a digital signal. When the gold finger connector is mis-inserted into the interface of the optical module for transmitting the digital signal, the gold finger connector cannot be inserted due to blocking by the first protruding portion, thereby avoiding mis-insertion of gold finger connectors and interfaces of optical modules of different signal types, and avoiding a short circuit, board burning, and the like.

In a possible implementation, the substrate further includes a second protruding portion. The substrate body includes a second side surface opposite to the first side surface. The second protruding portion is connected to the second side surface. The first protruding portion and the second protruding portion are respectively disposed on two sides of the substrate body, and the first protruding portion and the second protruding portion jointly prevent mis-insertion, thereby implementing low-cost physical foolproof.

In a possible implementation, lengths of the first protruding portion and the second protruding portion in an insertion and removal direction of the gold finger connector are less than or equal to a length of the substrate body in the insertion and removal direction of the gold finger connector.

In a possible implementation, thicknesses of the first protruding portion and the second protruding portion are less than or equal to a thickness of the substrate body.

In a possible implementation, thicknesses of the first protruding portion and the second protruding portion are different, and the different thicknesses of the first protruding portion and the second protruding portion facilitates distinguishing between a front surface and a back surface of the gold finger connector.

In a possible implementation, the gold finger connector includes a first gold finger module and a second gold finger module. The substrate body includes a first surface. The first gold finger module and the second gold finger module are distributed on the first surface along a first direction. The first direction on a surface of the substrate is perpendicular to the insertion and removal direction of the gold finger connector. The first gold finger module includes a plurality of signal terminals distributed along the first direction. The second gold finger module includes a plurality of signal terminals distributed along the first direction.

In a possible implementation, the substrate body is provided with an accommodating groove. The first gold finger module and the second gold finger module are distributed on two sides of the accommodating groove.

In a possible implementation, an inner wall of the accommodating groove is provided with a metal layer. The metal layer is connected to a ground end of the radio frequency transmission optical module.

In a possible implementation, a cross-sectional width of the substrate in the first direction ranges from 9.3 millimeters to 12 millimeters. The first direction on the surface of the substrate is perpendicular to the insertion and removal direction of the gold finger connector.

In a possible implementation, a width of the first protruding portion in the first direction ranges from 0.1 millimeters to 1.5 millimeters, and a width of the second protruding portion in the first direction ranges from 0.1 millimeters to 1.5 millimeters.

In a possible implementation, the substrate body, the first protruding portion, and the second protruding portion are integrally formed.

According to a second aspect, an embodiment of this application provides an interface. The interface is configured to be mated with the gold finger connector of the radio frequency transmission optical module provided in any implementation of the first aspect. The interface includes a housing. The housing forms an accommodating cavity. The accommodating cavity includes a first side wall. The first side wall is provided with a first groove. When the gold finger connector is mated with the interface, the first protruding portion of the gold finger connector is received in the first groove. The interface provided in this application is improved in a manner that corresponds to the gold finger connector. Corresponding to the first protruding portion of the gold finger connector, the first side wall of the accommodating cavity is provided with the first groove. When the gold finger connector is mated with the interface, the first protruding portion may be received in the first groove. In this way, a connector and an interface of a same type match, and a connector and an interface of different types do not match, thereby avoiding mis-insertion or other similar issues.

In a possible implementation, the accommodating cavity includes a first side wall and a second side wall that are opposite to each other. The second side wall is provided with a second groove. When the gold finger connector is mated with the interface, the second protruding portion of the gold finger connector is received in the second groove. When the first protruding portion and the second protruding portion are separately disposed on the gold finger connector, the interface is provided with the first groove corresponding to the first protruding portion, and is provided with the second groove corresponding to the second protruding portion. In this way, when the gold finger connector is mated with the interface, the first protruding portion may be received in the first groove, and the second protruding portion may be received in the second groove, to implement matching between the interface and the gold finger connector.

In a possible implementation, the interface further includes a first elastic piece module, a second elastic piece module, and an isolation barrier rib. The first elastic piece module, the second elastic piece module, and the isolation barrier rib are disposed in the accommodating cavity. The isolation barrier rib is disposed between the first elastic piece module and the second elastic piece module. The isolation barrier rib separates the first elastic piece module and the second elastic piece module in different cavities of the accommodating cavity. When the gold finger connector is mated with the interface, the isolation barrier rib is received in the accommodating groove of the gold finger connector. The first elastic piece module includes a plurality of first elastic pieces distributed along a first direction. A first end of the first elastic piece is configured to connect to a circuit board. A second end of the first elastic piece is configured to abut against the gold finger connector. The second elastic piece module includes a plurality of second elastic pieces distributed along the first direction. A first end of the second elastic piece is configured to connect to the circuit board. A second end of the second elastic piece is configured to abut against the gold finger connector.

In a possible implementation, a metal elastic piece is disposed on a surface of the isolation barrier rib. When the gold finger connector is mated with the interface, the isolation barrier rib may be received in the accommodating groove of the gold finger connector, and the metal elastic piece on the isolation barrier rib may abut against a metal layer on an inner wall of the accommodating groove of the gold finger connector. For example, the metal elastic piece may be grounded. In this way, grounding can be provided for the radio frequency transmission optical module through abutment between the metal elastic piece and the metal layer.

According to a third aspect, an embodiment of this application provides a connector assembly, including a gold finger connector and an interface. The gold finger connector includes a substrate. The substrate includes a substrate body and a first protruding portion. The substrate body includes a first side surface, and the first protruding portion is connected to the first side surface. The interface includes a housing. The housing forms an accommodating cavity. The accommodating cavity includes a first side wall. The first side wall is provided with a first groove. When the gold finger connector is mated with the interface, the first protruding portion is received in the first groove.

In a possible implementation, the substrate body includes a second side surface opposite to the first side surface. The substrate further includes a second protruding portion. The second protruding portion is connected to the second side surface. The accommodating cavity of the housing further includes a second side wall opposite to the first side wall. The second side wall is provided with a second groove. When the gold finger connector is mated with the interface, the second protruding portion is received in the second groove.

In a possible implementation, the gold finger connector includes a first gold finger module and a second gold finger module. The substrate body includes a first surface. The first gold finger module and the second gold finger module are distributed on the first surface along a first direction. The first gold finger module includes a plurality of signal terminals distributed along the first direction. The second gold finger module includes a plurality of signal terminals distributed along the first direction. The interface further includes a first elastic piece module, a second elastic piece module, and an isolation barrier rib. The first elastic piece module, the second elastic piece module, and the isolation barrier rib are disposed in the accommodating cavity. The isolation barrier rib is disposed between the first elastic piece module and the second elastic piece module. The isolation barrier rib separates the first elastic piece module and the second elastic piece module in different cavities of the accommodating cavity. The first elastic piece module includes a plurality of first elastic pieces distributed along the first direction. A first end of the first elastic piece is configured to connect to a circuit board. When the gold finger connector is mated with the interface, a second end of the first elastic piece abuts against the first gold finger connector module. The second elastic piece module includes a plurality of second elastic pieces distributed along the first direction. A first end of the second elastic piece is configured to connect to the circuit board. When the gold finger connector is mated with the interface, a second end of the second elastic piece abuts against the second gold finger connector module.

In a possible implementation, the substrate body is provided with an accommodating groove. When the gold finger connector is mated with the interface, the isolation barrier rib is received in the accommodating groove.

In a possible implementation, a metal elastic piece is disposed on a surface of the isolation barrier rib. An inner wall of the accommodating groove is provided with a metal layer. When the isolation barrier rib is received in the accommodating groove, the metal elastic piece abuts against the metal layer.

In a possible implementation, a cross-sectional width of the substrate in the first direction ranges from 9.3 millimeters to 12 millimeters.

In a possible implementation, a width of the first protruding portion in the first direction ranges from 0.1 millimeters to 1.5 millimeters, and a width of the second protruding portion in the first direction ranges from 0.1 millimeters to 1.5 millimeters.

According to a fourth aspect, an embodiment of this application further provides a communication device. The communication device includes a circuit board and the interface provided in any implementation of the second aspect. The interface is disposed on the circuit board.

### BRIEF DESCRIPTION OF DRAWINGS

FIG. 1 is a diagram of a communication system according to an embodiment of this application;
FIG. 2 is a diagram of an optical module for transmitting a digital signal according to an embodiment of this application;
FIG. 3 is a diagram of a gold finger connector and an interface of an optical module for digital transmission according to an embodiment of this application;
FIG. 4 is a diagram of an optical module for transmitting an analog signal according to an embodiment of this application;
FIG. 5 is a diagram of comparison between gold finger connectors of two optical modules and comparison between interfaces of the two optical modules according to an embodiment of this application;
FIG. 6 is a diagram of a function definition of a signal terminal of a gold finger connector according to an embodiment of this application;
FIG. 7 is a diagram of a radio frequency transmission optical module according to an embodiment of this application;
FIG. 8 is a diagram of a gold finger connector of a radio frequency transmission optical module according to an embodiment of this application;
FIG. 9 is a diagram of comparison between two gold finger connectors according to an embodiment of this application;
FIG. 10A and FIG. 10B are diagrams of a gold finger connector according to an embodiment of this application;
FIG. 11A and FIG. 11B are sectional views of a gold finger connector according to an embodiment of this application;
FIG. 12 is a diagram of a size of a gold finger connector according to an embodiment of this application;
FIG. 13 is a diagram of another gold finger connector according to an embodiment of this application;
FIG. 14 is a diagram of another gold finger connector according to an embodiment of this application;
FIG. 15 is a sectional view of another gold finger connector according to an embodiment of this application;
FIG. 16 is a diagram of a size of another gold finger connector according to an embodiment of this application;
FIG. 17A and FIG. 17B are diagrams of a structure of an interface according to an embodiment of this application;
FIG. 18 is a diagram of mating between a gold finger connector and an interface according to an embodiment of this application;
FIG. 19 is a diagram of an interface according to an embodiment of this application;
FIG. 20 is a diagram of a structure of another interface according to an embodiment of this application; and
FIG. 21 is a diagram of a principle of mis-insertion prevention according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In embodiments of this application, terms such as "first" and "second" are used to distinguish between objects with similar names or functions or effects. A person skilled in the art may understand that the terms such as "first" and "second" do not limit a quantity and an execution sequence. The term "coupling" is used for representing an electrical connection, including a direct connection through a wire or a connection end or an indirect connection through another component. Therefore, "coupling" should be considered as a generalized electronic communication connection.

It should be noted that in this application, the term like "example" or "for example" is used to represent an example, an illustration, or a description. Any embodiment or design scheme described as an "example" or "for example" in this application should not be explained as being more preferred or having more advantages than another embodiment or design scheme. Specifically, use of the term like "example" or "for example" is intended to present related concepts in a specific manner.

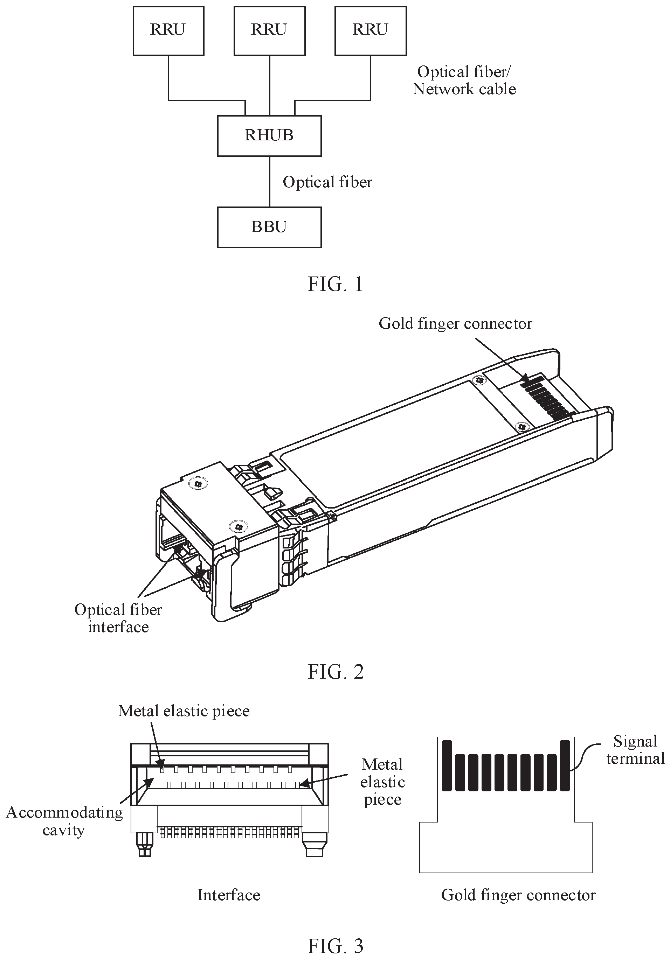

The solutions provided in embodiments of this application may be applied to a communication system, for example, an indoor wireless communication system. An indoor base station is used as an example. Refer to FIG. 1. The base station includes a baseband unit (baseband unit, BBU), a hub unit (remote radio unit hub, RHUB), and a remote radio unit (remote radio unit, RRU). The RHUB is referred to as a mother end, and the RRU is referred to as a head end. A signal, usually a digital signal, is transmitted between the RHUB and the RRU through an optical fiber. The RRU includes a conversion circuit, configured to convert a digital signal into an analog signal, and then transmit the analog signal via an antenna for use by a user.

A radio frequency transmission optical module (optical module) is an optical-to-electrical component configured to perform optical-to-electrical conversion and electrical-to-optical conversion. A transmit end of the radio frequency transmission optical module converts an electrical signal into an optical signal, and a receive end converts an optical signal into an electrical signal. For example, the BBU converts an electrical signal into an optical signal through a radio frequency transmission optical module, and transmits the signal to the RHUB through an optical fiber. After the signal arrives at the RHUB, another radio frequency transmission optical module converts the optical signal into an electrical signal for processing by the RHUB.

In the communication system shown in FIG. 1, a digital signal is transmitted through an optical fiber, and a radio frequency transmission optical module completes optical-to-electrical conversion and electrical-to-optical conversion. The radio frequency transmission optical module may also be referred to as a digital optical module. The digital optical module is classified in a package form, and common forms include small form-factor pluggable (Small Form-factor Pluggable, SFP) and small form-factor pluggable plus (Small Form-factor Pluggable Plus, SFP+). FIG. 2 is a diagram of a digital optical module that conforms to an SFP protocol.

One end of the digital optical module is provided with an optical fiber interface for connecting to an optical fiber, and the other end of the digital optical module is provided with a gold finger connector. The digital optical module is connected to a motherboard of a communication device like a BBU, an RHUB, or an RRU through mating between the gold finger connector and the interface. For example, the motherboard of the communication device is provided with an interface, and the gold finger connector of the digital optical module may be mis-inserted into the interface, and is mated with the interface. In this way, a signal transmitted over the optical fiber may be converted into an electrical signal, and the electrical signal is transmitted to the communication device like the BBU, the RHUB, or the RRU; or an electrical signal of the communication device like the BBU, the RHUB, or the RRU is converted into an optical signal, and the optical signal is transmitted through an optical fiber.

FIG. 3 is a diagram of a gold finger connector and an interface corresponding to the gold finger connector of the digital optical module shown in FIG. 2. The gold finger connector (hereinafter referred to as a gold finger connector) of the digital optical module includes an upper surface and a lower surface (only one of the surfaces is shown in the figure). A plurality of signal terminals are disposed on both the upper surface and the lower surface of the gold finger connector. Correspondingly, the interface includes an accommodating cavity, and the gold finger connector may be inserted into the accommodating cavity. Two groups of metal elastic pieces, that is, an upper group and a lower group, are disposed in the accommodating cavity. When the gold finger connector is inserted into and mated with the interface, ends of the metal elastic pieces at an upper part of the accommodating cavity are in one-to-one correspondence with and abut against the plurality of signal terminals on the upper surface of the gold finger connector, ends of the metal elastic pieces at a lower part of the accommodating cavity are in one-to-one correspondence with and abut against the plurality of signal terminals on the lower surface of the gold finger connector, and other ends of the metal elastic pieces at the interface are connected to a circuit board of the communication device, so that bidirectional transmission of signals is implemented through abutment between the metal elastic pieces at the interface and the signal terminals of the gold finger connector.

As mentioned in the foregoing example, when the digital signal is transmitted by using the optical fiber, a conversion circuit needs to be disposed in the RRU, to convert the digital signal into an analog signal. With the development of technologies, statistics show that power consumption of base stations in the 5G era is several times higher than that in the 4G era. In addition, high-frequency scenarios require higher bandwidth and higher signal quality. As a result, the power consumption and a size of the head end increase.

A radio-over-fiber (radio-over-fiber, RoF) communication technology is a newly developed radio access technology that combines optical fiber communication and wireless communication to meet a requirement of high-speed and large-capacity wireless communication. Microwave is modulated to laser at a mother end, and then a modulated light wave is transmitted through a complex optical fiber link. After arriving at the head end, a microwave signal is demodulated through optical-to-electrical conversion, and then transmitted to a user via an antenna. A digital intermediate frequency and other parts can be moved from the head end to the mother end by using the RoF technology, high-quality analog signals are transmitted, and the power consumption and the size of the head end are reduced. The RoF technology is expected to become a key technology of next-generation wireless communication.

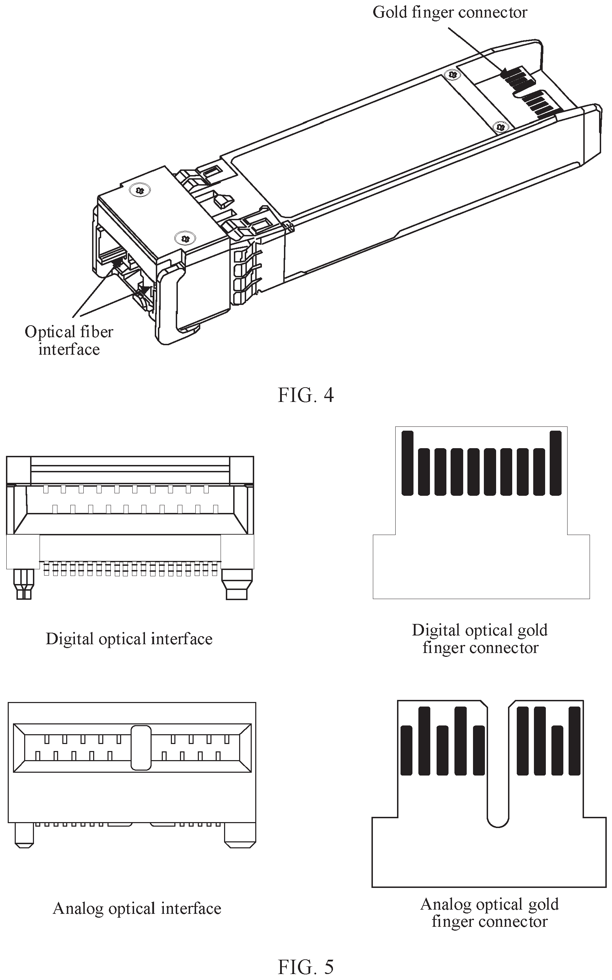

In the RoF technology, an analog signal is modulated to an optical signal for transmission. Because an analog signal is transmitted, a radio frequency optical module needs to implement electrical-to-optical conversion or optical-to-electrical conversion (of the analog signal). Therefore, the optical module may also be referred to as an analog optical module. FIG. 4 is a diagram of another radio frequency transmission optical module according to an embodiment of this application. The radio frequency transmission optical module is configured to convert or transmit an analog signal. Therefore, the radio frequency transmission optical module may also be referred to as an analog optical module. Currently, there is no clear standard for an interface, an appearance, and a performance indicator of the analog optical module. In consideration of compatibility and weak perception of a user plane, the radio frequency transmission optical module provided in this embodiment of this application is compatible with the SFP protocol in terms of an external size.

The external size of the analog optical module provided in this embodiment of this application is compatible with the SFP protocol. In other words, the external sizes of the analog optical module and the digital optical module are the same, and a size of a corresponding interface is also the same as a size of an interface of the digital optical module. In terms of connectors, an electrical interface is redesigned based on the SPP protocol to meet isolation requirements of an electrical interface of the analog optical module. A middle part of the gold finger connector is grooved. A corresponding interface is also designed accordingly. A barrier rib is disposed in an accommodating cavity of the interface of the analog optical module. When the gold finger connector of the analog optical module is mated with the interface of the analog optical module, the barrier rib of the interface is received in a groove provided by the gold finger connector. In this way, the barrier rib and the groove can match.

Refer to FIG. 1. Because a digital signal is transmitted between the BBU and the RHUB, and an analog signal is transmitted between the RHUB and an RRU, there may be a scenario in which a digital optical module and an analog optical module are at a same site. Because an external size of the analog optical module is the same as a size of the digital optical module, and a gold finger connector of the analog optical module and a gold finger connector of the digital optical module are also the same in width, cross insertion between the two types of optical modules may occur. For example, the gold finger of the analog optical module is mis-inserted into an interface of the digital optical module.

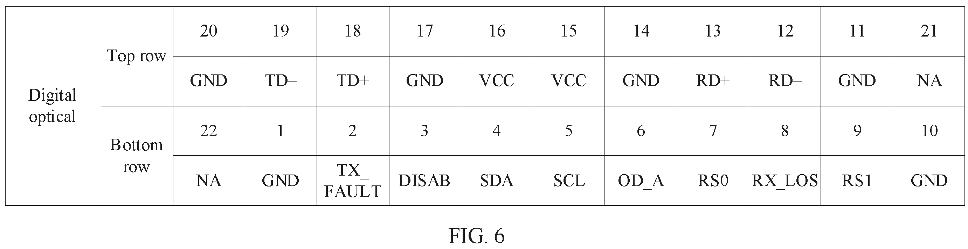

Refer to FIG. 5 and FIG. 6. FIG. 5 is a diagram of comparison between gold finger connectors of two optical modules and comparison between corresponding interfaces according to an embodiment of this application. FIG. 6 is a diagram of a function definition of a signal terminal of an interface (or a gold finger connector) of a digital optical module. A quantity and an arrangement of signal terminals of an interface (or a gold finger connector) of an analog optical module are different from a quantity and an arrangement of signal terminals of the interface (or the gold finger connector) of the digital optical module. Therefore, if the gold finger connector of the digital optical module is inserted into the interface of the analog optical module or the gold finger connector of the analog optical module is inserted into the interface of the digital optical module, a short circuit may occur, and devices may be damaged.

A barrier rib is disposed in the interface of the analog optical module, and no groove is disposed in the gold finger connector of the digital optical module. Therefore, if the gold finger connector of the digital optical module is inserted into the connector of the analog optical module, the gold finger connector cannot be inserted because of blocking by the barrier rib in the interface of the analog optical module. This can avoid mis-insertion of the gold finger connector of the digital optical module in the interface of the analog optical module. However, the gold finger connector of the analog optical module has a same width as the gold finger connector of the digital optical module. When the gold finger connector of the analog optical module is mis-inserted into the interface of the digital optical module, a ground part of the gold finger connector of the analog optical module may contact a VCC elastic piece of the interface of the digital optical module, and there is a risk of a short circuit on a main circuit board, sparking, or board burning. However, costs of the device like the BBU, the RHUB, and the RRU are high. Therefore, a physical foolproof method is needed to ensure that devices are not damaged.

There is a mature and universal protocol or standard for the gold finger connector, the interface, or the like of the digital optical module, and is not easy to change. Therefore, an embodiment of this application provides an optical module. A size of the gold finger connector of the optical module is improved, and an interface matching the gold finger connector is correspondingly improved, to avoid mis-insertion of the golden finger connector of the analog optical module in the interface of the digital optical module or avoid mis-insertion of the gold finger connector of the digital optical module in the interface of the analog optical module.

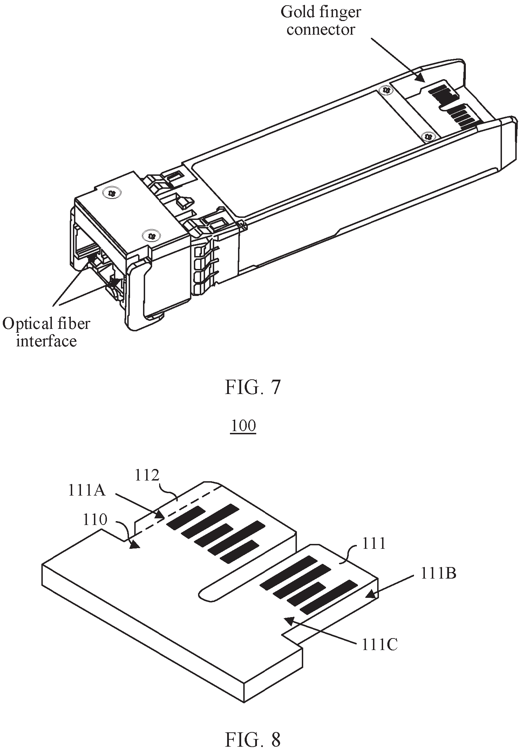

Refer to FIG. 7 and FIG. 8. FIG. 7 is a diagram of a radio frequency transmission optical module according to an embodiment of this application. The radio frequency transmission optical module includes a housing and a gold finger connector 100 disposed in the housing. The gold finger connector 100 is configured to connect to an interface. FIG. 8 is a diagram of a structure of the gold finger connector 100 of the radio frequency transmission optical module shown in FIG. 7.

With reference to FIG. 8, the gold finger connector 100 includes a substrate 110. The substrate 110 includes a substrate body 111 and a first protruding portion 112. The substrate body 111 includes a first surface 111C, a second surface (not shown in the figure), a first side surface 111A, and a second side surface 111B. The first side surface 111A and the second side surface 111B are disposed opposite to each other. The first surface 111C and the second surface 111D are two surfaces that are disposed opposite to each other. The first surface 111C may also be referred to as an upper surface, and the second surface is referred to as a lower surface.

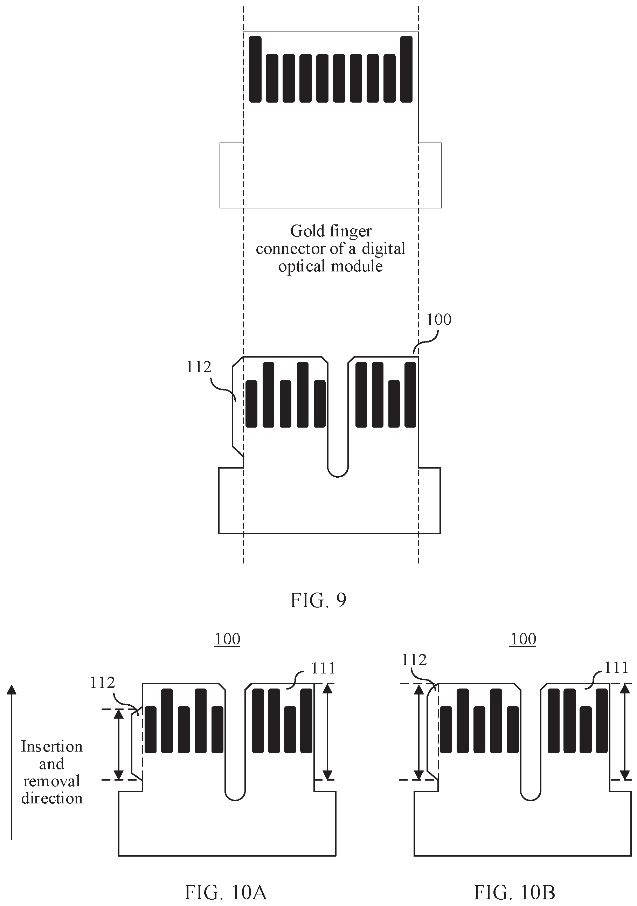

Refer to FIG. 8 and FIG. 9. The first protruding portion 112 of the gold finger connector 100 provided in this embodiment of this application is connected to the first side surface 111A. The first protruding portion 112 is disposed. Then, refer to FIG. 9. In comparison with the gold finger connector of the digital optical module, a width of the gold finger connector 100 of the radio frequency transmission optical module provided in this embodiment of this application is greater than a width of the gold finger connector of the digital optical module. Because a width of the interface of the digital optical module matches the width of the gold finger connector of the digital optical module, the width of the gold finger connector 100 of the radio frequency transmission optical module provided in this embodiment of this application is also greater than the width of the interface corresponding to the digital optical module, to avoid mis-insertion of the gold finger connector 100 of the radio frequency transmission optical module provided in this embodiment of this application in the interface of the digital optical module, and avoid a short circuit of a circuit board and device damage.

For example, a length of the first protruding portion 112 in an insertion and removal direction of the gold finger connector may be less than or equal to a length of the substrate body 111 in the insertion and removal direction of the gold finger connector. Refer to FIG. 10A and FIG. 10B. A length of the first protruding portion 112 of the gold finger connector 100 shown in FIG. 10A in an insertion and removal direction of the gold finger connector is less than a length of the substrate body 111 in the insertion and removal direction of the gold finger connector. A length of the first protruding portion 112 of the gold finger connector 100 shown in FIG. 10B in an insertion and removal direction of the gold finger connector is the same as a length of the substrate body 111 in the insertion and removal direction of the gold finger connector.

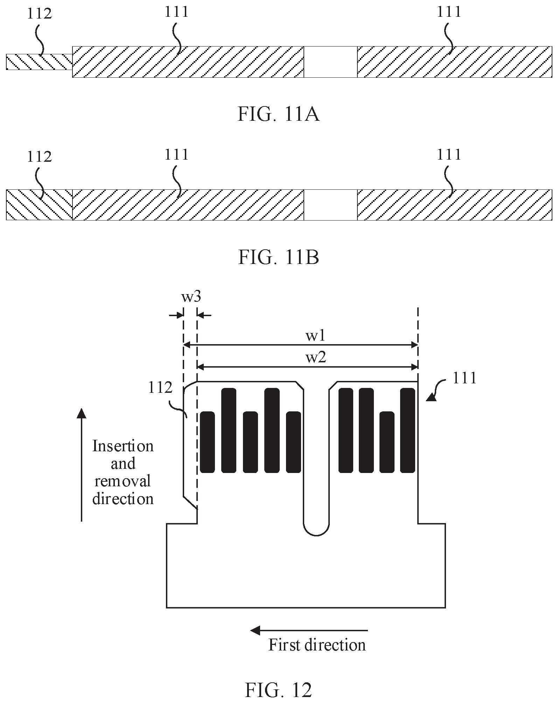

For example, FIG. 11A and FIG. 11B are sectional views of the gold finger connector 100. With reference to a diagram of FIG. 11A, a thickness of the first protruding portion 112 may also be less than a thickness of the substrate body 111. Alternatively, with reference to a diagram of FIG. 11B, a thickness of the first protruding portion 112 may be the same as a thickness of the substrate body 111. In this way, processing difficulty can be reduced.

To avoid mis-insertion of the gold finger connector 100 of the radio frequency transmission optical module provided in this embodiment of this application in the interface 200 of the digital optical module, with reference to FIG. 8 and FIG. 12, a width w1 of the gold finger connector 100 of the radio frequency transmission optical module provided in this embodiment of this application in the first direction ranges from 9.3 millimeters to 12 millimeters, for example, may be 10.03 millimeters. A width w2 of the substrate body 111 of the gold finger connector 100 in the first direction is about 9.2 millimeters, and on this basis, a width w3 of the first protruding portion 112 in the first direction ranges from 0.1 millimeters to 1.5 millimeters. The first protruding portion 112 and the substrate body 111 may be integrally disposed. After the first protruding portion 112 is disposed, a size of the substrate 110 of the gold finger connector 100 is increased, so that the gold finger connector 100 of the radio frequency transmission optical module provided in this embodiment of this application cannot be inserted into an interface of the digital optical module due to blocking by the first protruding portion 112.

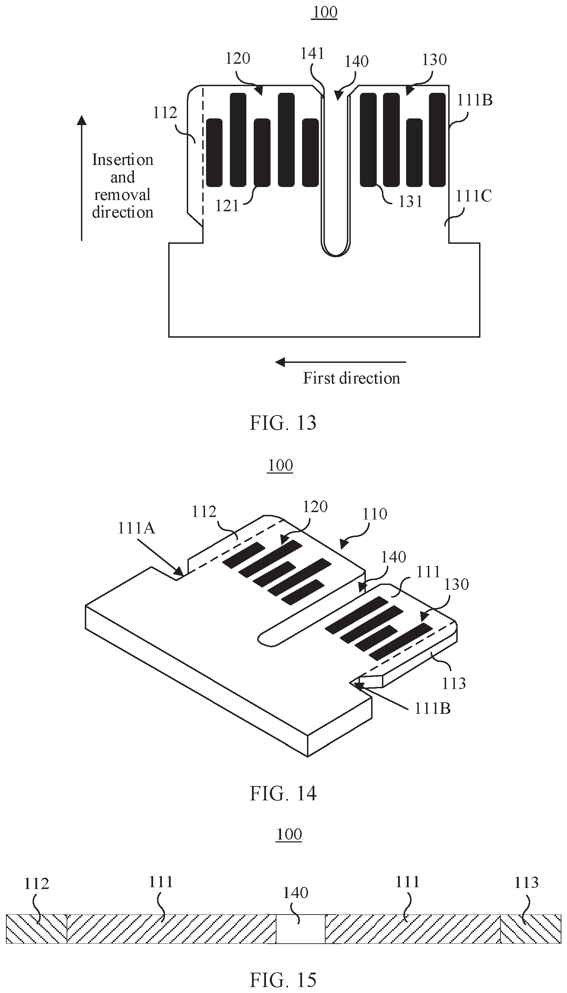

Refer to FIG. 8 and FIG. 13. A first gold finger module 120 and a second gold finger module 130 that are arranged along the first direction are disposed on a first surface 111C of the substrate body 111, and the first direction on the first surface 111C is perpendicular to the insertion and removal direction of the gold finger connector 100. The first gold finger module 120 may include a plurality of signal terminals 121 arranged along the first direction. The signal terminals 121 are also referred to as gold fingers. The second gold finger module 130 may include a plurality of signal terminals 131 arranged along the first direction.

In a possible implementation, similar to the first surface 111C, a third gold finger module and a fourth gold finger module that are arranged and distributed along the first direction are disposed on a second surface (not shown in the figure) of the substrate body 111, the third gold finger module includes a plurality of signal terminals arranged along the first direction, and the fourth gold finger module includes a plurality of signal terminals arranged along the first direction.

The signal terminal is for transmitting a signal, and the signal terminal is connected to an optical-to-electrical conversion circuit or an electrical-to-optical conversion circuit of the radio frequency transmission optical module. For a function definition, an arrangement manner, and the like of the signal terminal, refer to the example shown in FIG. 5. Details are not described herein again. When the gold finger connector 100 of the radio frequency transmission optical module is mated with the interface, the signal terminal is in contact with the elastic piece in the interface, so that a signal can be transmitted.

In a possible implementation, with reference to FIG. 14, the substrate body 111 may be provided with an accommodating groove 140, and the accommodating groove 140 may be located between the first gold finger module 120 and the second gold finger module 130. In a possible implementation, the accommodating groove 140 may be a U-shaped groove. Based on such a design, when the gold finger connector 100 of the radio frequency transmission optical module is mated with the interface, the isolation barrier rib of the interface may be received in the accommodating groove 140. For example, a width of the accommodating groove 140 may range from 0.5 millimeter to 3 millimeters. For example, the width of the accommodating groove 140 may be 1 millimeter.

In a possible implementation, an inner wall of the accommodating groove 140 is provided with a metal layer 141. The metal layer 141 is connected to a ground end of the radio frequency transmission optical module. When the gold finger connector 100 of the radio frequency transmission optical module is mated with the interface, the isolation barrier rib of the interface may be received in the accommodating groove 140, and a metal elastic piece may be disposed on a surface of the isolation barrier rib. When the isolation barrier rib is received in the accommodating groove 140, the metal elastic piece of the isolation barrier rib may abut against the metal layer 141 of the accommodating groove 140. Generally, the metal elastic piece of the isolation barrier rib may be grounded. The metal elastic piece of the isolation barrier rib abuts against the metal layer 141 of the accommodating groove 140 to provide grounding for the radio frequency transmission optical module.

In the foregoing example, the substrate 110 of the gold finger connector 100 includes a first protruding portion 112, and the first protruding portion 112 is connected to the first side surface 111A of the substrate body 111. In another possible implementation, still with reference to FIG. 14, the substrate 110 of the gold finger connector 100 further includes a second protruding portion 113. The second protruding portion 113 is connected to the second side surface 111B of the substrate body 111. The first protruding portion 112 and the second protruding portion 113 are disposed opposite to each other. The substrate body 111, the first protruding portion 112, and the second protruding portion 113 may be integrally disposed. The first protruding portion 112 and the second protruding portion 113 are disposed on two sides of the gold finger connector 100, to widen a width of the gold finger connector 100 of the radio frequency transmission optical module, so that a physical foolproof function is jointly implemented, and mis-insertion of the radio frequency transmission optical module provided in this embodiment of this application in an interface corresponding to the digital optical module is avoided.

A structure and a principle of the second protruding portion 113 are basically the same as a structure and a principle of the first protruding portion 112. This embodiment of this application is merely briefly described. For example, the lengths of the first protruding portion 112 and the second protruding portion 113 in the insertion and removal direction of the gold finger connector may be less than the length of the substrate body 111 in the insertion and removal direction of the gold finger connector. When the radio frequency transmission optical module provided in this embodiment of this application is mis-inserted into the interface of the digital optical module, because of existence of the first protruding portion 112 and the second protruding portion 113, a width of the gold finger connector 100 in the first direction is greater than a width of the accommodating cavity of the interface of the digital optical module, so that the gold finger connector 100 can be prevented from being inserted into the interface of the digital optical module.

In a possible implementation, the lengths of the first protruding portion 112 and the second protruding portion 113 in the insertion and removal direction of the gold finger connector may be the same as the length of the substrate body 111 in the insertion and removal direction of the gold finger connector. In this way, the first protruding portion 112 represents the overall broadening of the substrate body 111 in a direction of the second side surface 111B toward the first side surface 111A, and the second protruding portion 113 represents the overall broadening of the substrate body 111 in a direction of the first side surface 111A toward the second side surface 111B. A width of an expanded substrate body 111 of the gold finger connector 100 is greater than a width of the accommodating cavity 211 of the interface 200 of the digital optical module, to prevent the gold finger connector 100 from being inserted into the interface 200 of the digital optical module.

In a possible implementation, thicknesses of the first protruding portion 112 and the second protruding portion 113 may be less than a thickness of the substrate body 111. In another possible implementation, with reference to FIG. 15, thicknesses of the first protruding portion 112 and the second protruding portion 113 may alternatively be the same as a thickness of the substrate body 111.

In addition, the thicknesses of the first protruding portion 112 and the second protruding portion 113 may be the same or different. In a case in which the thickness of the first protruding portion 112 is different from the thickness of the second protruding portion 113, a size of the interface is adjusted correspondingly, so that a direction of the gold finger connector 100 may be distinguished by different thicknesses of the first protruding portion 112 and of the second protruding portion 113. For example, whether the first surface of the substrate body 111 of the gold finger connector 100 is upward, or the second surface is upward is distinguished.

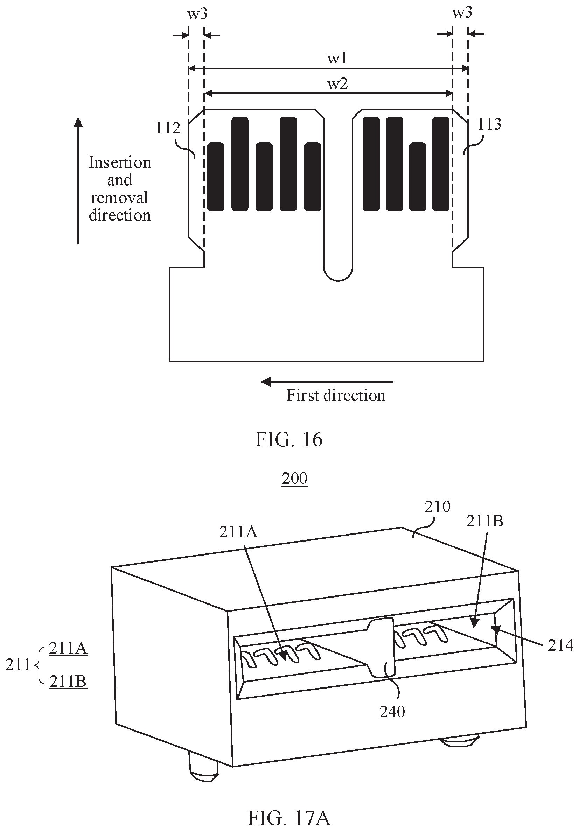

Refer to FIG. 16. The width w1 of the gold finger connector 100 of the radio frequency transmission optical module provided in this embodiment of this application in the first direction ranges from 9.3 millimeters to 12 millimeters, the width w2 of the substrate body 111 of the gold finger connector 100 in the first direction is about 9.2 millimeters, and widths of the first protruding portion 112 and the second protruding portion 113 may be the same. On this basis, the width w3 of the first protruding portion 112 in the first direction ranges from 0.1 millimeters to 1.5 millimeters, and a width w3 of the second protruding portion 113 in the first direction ranges from 0.1 millimeters to 1.5 millimeters. Providing the first protruding portion 112 and the second protruding portion 113 increases a size of the substrate 110 of the gold finger connector 100, so that the gold finger connector 100 of the radio frequency transmission optical module provided in this embodiment of this application cannot be inserted into the interface of the digital optical module due to blocking by the first protruding portion 112 and the second protruding portion 113, thereby avoiding mis-insertion.

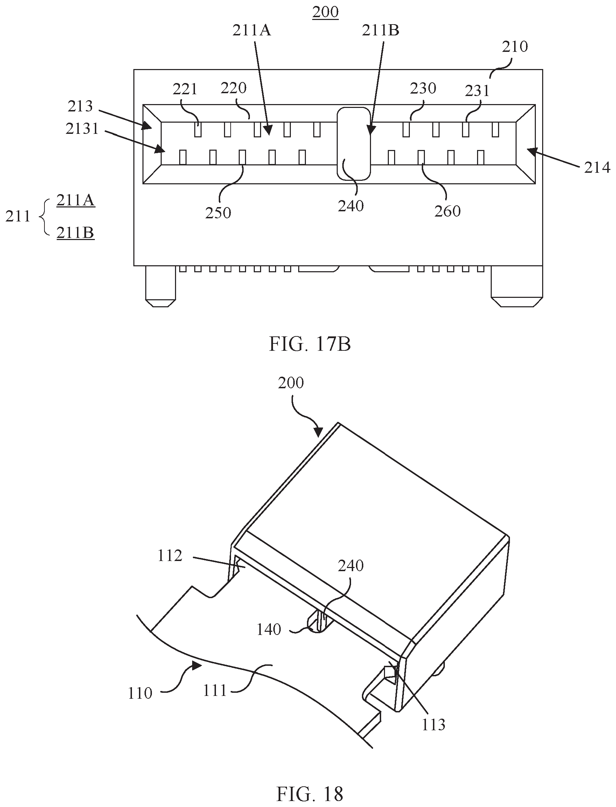

Because the width of the gold finger connector of the radio frequency transmission optical module is increased, to match the gold finger connector, an embodiment of this application further provides an interface. The interface may be installed on a circuit board of a device like a BBU, an RHUB, or an RRU, and is configured to be mated with the gold finger connector of the radio frequency transmission optical module. FIG. 17A is a diagram of a structure of an interface according to an embodiment of this application. FIG. 17B is a diagram of an interface in an insertion and removal direction of a gold finger connector. With reference to FIG. 17A and FIG. 17B, the interface 200 may include a housing 210, a first elastic piece module 220, a second elastic piece module 230, and an isolation barrier rib 240. The housing 210 forms an accommodating cavity 211. The first elastic piece module 220, the second elastic piece module 230, and the isolation barrier rib 240 are disposed in the accommodating cavity 211. The isolation barrier rib 240 is disposed between the first elastic piece module 220 and the second elastic piece module 230, and separates the first elastic piece module 220 and the second elastic piece module 230 in different cavities of the accommodating cavity 211. For example, the isolation barrier rib 240 may isolate the first elastic piece module 220 in a first cavity 211A, and isolate the second elastic piece module 230 in a second cavity 211B.

Refer to FIG. 17B. The first elastic piece module 220 includes a plurality of first elastic pieces 221 distributed in the first direction, and a first end of the first elastic piece 221 is configured to connect to a circuit board. For example, when the interface 200 is disposed on a circuit board of a device like a BBU, an RHUB, or an RRU, the first end of the first elastic piece 221 may be welded on the circuit board, and a second end of the first elastic piece 221 is configured to abut against a gold finger connector. For example, when the gold finger connector of the radio frequency transmission optical module is inserted into the interface 200, the second end of the first elastic piece 221 abuts against a signal terminal of the gold finger connector. The second elastic piece module 230 includes a plurality of second elastic pieces 231 distributed along the first direction, a first end of the second elastic piece 231 is configured to connect to the circuit board, and a second end of the second elastic piece 231 is configured to abut against the gold finger connector.

In a possible implementation, because signal terminals are disposed on both an upper surface and a lower surface of the gold finger connector of the radio frequency transmission optical module, a plurality of elastic piece modules are correspondingly disposed on the interface 200 provided in this embodiment of this application. For example, the interface 200 includes a first elastic piece module 220 and a second elastic piece module 230 that are located in an upper part of the accommodating cavity 211 and that are configured to abut against the signal terminals located on the upper surface of the gold finger connector. The interface 200 further includes a third elastic piece module 250 and a fourth elastic piece module 260 that are located in a lower part of the accommodating cavity 211. The third elastic piece module 250 and the fourth elastic piece module 260 are configured to abut against the signal terminals located on the lower surface of the gold finger connector. Inside the accommodating cavity 211, the first elastic piece module 220 is opposite to the third elastic piece module 250, the second elastic piece module 230 is opposite to the fourth elastic piece module 260, and the isolation rib 240 isolates the first elastic piece module 220 and the third elastic piece module 250 in the first cavity 211A, and isolates the second elastic piece module 230 and the fourth elastic piece module 260 in the second cavity 211B. For function definitions of the elastic pieces in the elastic piece module, refer to FIG. 5, FIG. 6, and corresponding examples. Details are not described again in this embodiment of this application.

FIG. 18 is a diagram of mating between a gold finger connector 100 and an interface 200 according to an embodiment of this application. When the gold finger connector is mated with the interface 200, an isolation barrier rib 240 is received in an accommodating groove 140 of the gold finger connector 100. In the foregoing example, a width of the accommodating groove may be 1 millimeter. Therefore, a width of the isolation barrier rib 240 needs to be less than the width of the accommodating groove. For example, the width of the isolation barrier rib 240 may be 0.9 millimeters. A metal elastic piece (not shown in the figure) may be disposed on a surface of the isolation barrier rib 240, and the metal elastic piece may be configured to connect to a ground end of the circuit board. In this way, when the gold finger connector of the radio frequency transmission optical module is inserted into the interface 200, the metal elastic piece on the surface of the isolation barrier rib 240 may abut against a metal layer in the accommodating groove of the gold finger connector, to provide grounding for the gold finger connector.

Because a size of the gold finger connector of the radio frequency transmission optical module provided in this embodiment of this application is widened, correspondingly, a size of the accommodating cavity 211 of the interface 200 also needs to be correspondingly adjusted. A width of the accommodating cavity 211 in the first direction is greater than a width of the substrate 110 of the gold finger connector 100 in the foregoing example, to ensure that the gold finger connector 100 can be inserted into the interface 200. Herein, the first direction on a surface of the substrate of the gold finger connector is perpendicular to an insertion and removal direction of the gold finger connector.

For example, in the foregoing example, if the width of the gold finger connector is 10.03 millimeters, the width of the accommodating cavity 211 of the interface 200 provided in this embodiment of this application may be 10.15 millimeters.

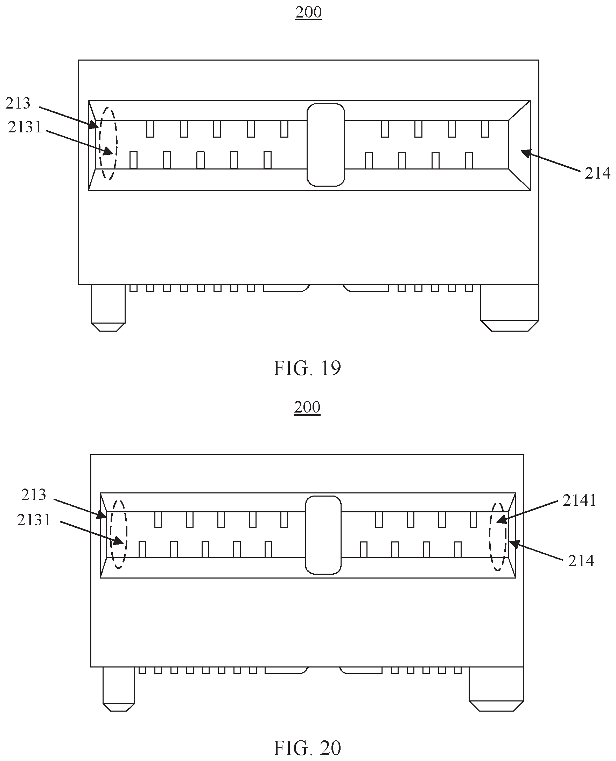

In a possible implementation, with reference to FIG. 8 and FIG. 19, the substrate 110 of the gold finger connector 100 includes a first protruding portion 112. In this case, the accommodating cavity 211 of the interface 200 includes a first side wall 213 and a second side wall 214 that are opposite to each other, and the first side wall 213 is provided with a first groove 2131. When the gold finger connector 100 of the radio frequency transmission optical module is inserted into the interface 200, with reference to FIG. 19, when the gold finger connector 100 is mated with the interface 200, the first protruding portion 112 is received in the first groove 2131.

In another possible implementation, with reference to FIG. 14 and FIG. 20, the substrate 110 of the gold finger connector 100 includes a first protruding portion 112 and a second protruding portion 113, and the first protruding portion 112 and the second protruding portion 113 are disposed opposite to each other. In this case, the accommodating cavity 211 of the interface 200 includes a first side wall 213 and a second side wall 214 that are opposite to each other, the first side wall 213 is provided with a first groove 2131, and the second side wall 214 is provided with a second groove 2141. When the gold finger connector 100 of the radio frequency transmission optical module is inserted into the interface 200, with reference to FIG. 20, when the gold finger connector 100 is mated with the interface 200, the first protruding portion 112 is received in the first groove 2131, and the second protruding portion 113 is received in the second groove 2141.

For example, thicknesses of the first protruding portion 112 and the second protruding portion 113 of the gold finger connector 100 may be the same as a thickness of the substrate body 111. In this case, a size of the first groove 2131 for accommodating the first protruding portion 112 may be the same as a size of the accommodating cavity for accommodating the substrate body 111, and a size of the second groove 2141 for accommodating the second protruding portion 113 may be the same as the size of the accommodating cavity for accommodating the substrate body 111. The size herein may be considered as heights of the first groove 2131, the second groove 2141, and the accommodating cavity 211. In this way, the first groove 2131 may be formed in the interface 200 by making the first side wall 213 thinner. Similarly, the second groove 2141 may be formed by making the second side wall 214 as a whole thinner.

In a possible implementation, thicknesses of the first protruding portion 112 and the second protruding portion 113 are different. Correspondingly, sizes of the first groove 2131 and the second groove 2141 are also different. The first groove 2131 is configured to match the first protruding portion 112, and the second groove 2141 is configured to match the second protruding portion 113. In this way, a correspondence may be distinguished based on different thicknesses of the first protruding portion 112 and the second protruding portion 113 and inconsistent sizes of the first groove 2131 and the second groove 2141. For example, it is assumed that the thickness of the first protruding portion 112 is greater than that of the second protruding portion 113, and the size of the first groove 2131 is greater than that of the second groove 2141. In this way, only when the first protruding portion 112 is received in the first groove 2131, and the second protruding portion 113 is received in the second groove 2141, the gold finger connector 100 may be inserted into the interface 200.

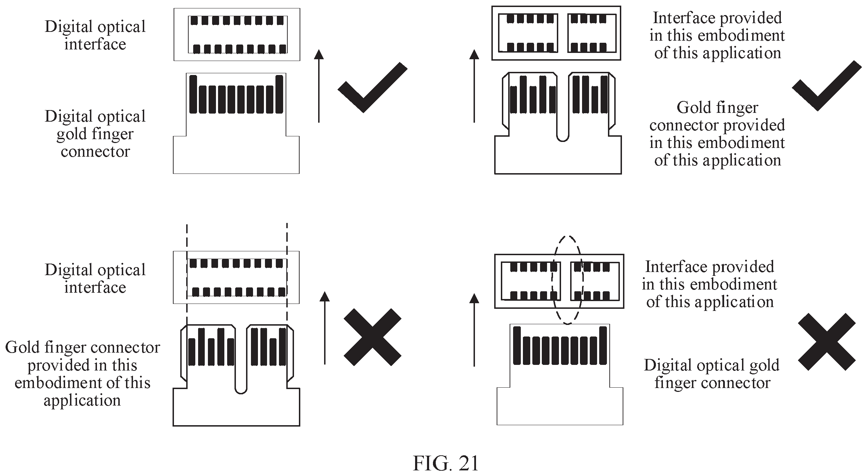

The radio frequency transmission optical module provided in this embodiment of this application improves a structure of the gold finger connector of the radio frequency transmission optical module, and correspondingly improves an interface corresponding to the radio frequency transmission optical module. With reference to FIG. 21, the gold finger connector 100 of the radio frequency transmission optical module provided in this embodiment of this application matches the interface 200, and the gold finger connector of the digital optical module matches the interface of the digital optical module. When the gold finger connector 100 of the radio frequency transmission optical module provided in this embodiment of this application is mis-inserted into the interface of the digital optical module, because the gold finger connector is provided with the first protruding portion and/or the second protruding portion, a larger size prevents the gold finger connector from being inserted into the interface of the digital optical module, thereby avoiding an error. When the gold finger connector of the digital optical module is mis-inserted into the interface 200 provided in this embodiment of this application, because an isolation barrier rib is disposed in the interface 200, insertion of the gold finger connector of the digital optical module is blocked.

According to the solutions provided in embodiments of this application, without changing an overall size of a module, cross insertion between a digital optical module and an analog optical module is prevented at a low cost through coordinated structural design between the gold finger connector and the interface, thereby implementing a physical foolproof function. In addition to the sizes provided in this embodiment of this application, sizes of the gold finger connector and the interface may also be correspondingly adjusted.

An embodiment of this application further provides a communication device. The communication device includes a circuit board and the interface provided in the foregoing embodiments. The interface may be installed on the circuit board, and the interface is configured to connect to a gold finger connector of a radio frequency transmission optical module.

An embodiment of this application further provides a communication system. The communication system includes a first communication device, a second communication device, and a transmission line. The transmission line may be an optical fiber. A first end of the transmission line is connected to the first communication device, and a second end of the transmission line is connected to the second communication device. For example, a first radio frequency transmission optical module is disposed on the first end of the transmission line, a second radio frequency transmission optical module is disposed on the second end of the transmission line, the first radio frequency transmission optical module is connected to a first interface of the first communication device, the second radio frequency transmission optical module is connected to a second interface of the second communication device, and a signal is transmitted between the first communication device and the second communication device by using the optical fiber. The first radio frequency transmission optical module and the second radio frequency transmission optical module are the foregoing radio frequency transmission optical modules provided in the examples shown in FIG. 8 to FIG. 16 in embodiments of this application. The first interface and the second interface may be the foregoing interfaces provided in the examples shown in FIG. 17 or FIG. 18.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio frequency transmission optical module, wherein the radio frequency transmission optical module comprises a housing and a gold finger connector disposed in the housing, and the gold finger connector is configured to connect to an interface; and
the gold finger connector comprises a substrate, the substrate comprises a substrate body and a first protruding portion, the substrate body comprises a first side surface, and the first protruding portion is connected to the first side surface.

2. The radio frequency transmission optical module according to claim 1, wherein the substrate further comprises a second protruding portion, the substrate body comprises a second side surface opposite to the first side surface, and the second protruding portion is connected to the second side surface.

3. The radio frequency transmission optical module according to claim 2, wherein lengths of the first protruding portion and the second protruding portion in an insertion and removal direction of the gold finger connector are less than or equal to a length of the substrate body in the insertion and removal direction of the gold finger connector.

4. The radio frequency transmission optical module according to claim 2, wherein thicknesses of the first protruding portion and the second protruding portion are less than or equal to a thickness of the substrate body.

5. The radio frequency transmission optical module according to claim 4, wherein the first protruding portion and the second protruding portion have different thicknesses.

6. The radio frequency transmission optical module according to any one of claims 2 to 4, wherein the gold finger connector comprises a first gold finger module and a second gold finger module;
the substrate body comprises a first surface, the first gold finger module and the second gold finger module are distributed on the first surface along a first direction, and the first direction on a surface of the substrate is perpendicular to the insertion and removal direction of the gold finger connector; and
the first gold finger module comprises a plurality of signal terminals distributed along the first direction, and the second gold finger module comprises a plurality of signal terminals distributed along the first direction.

7. The radio frequency transmission optical module according to claim 6, wherein the substrate body is provided with an accommodating groove, and the first gold finger module and the second gold finger module are distributed on two sides of the accommodating groove.

8. The radio frequency transmission optical module according to claim 7, wherein an inner wall of the accommodating groove is provided with a metal layer, and the metal layer is connected to a ground end of the radio frequency transmission optical module.

9. The radio frequency transmission optical module according to any one of claims 6 to 8, wherein a cross-sectional width of the substrate in the first direction ranges from 9.3 millimeters to 12 millimeters, and the first direction on the surface of the substrate is perpendicular to the insertion and removal direction of the gold finger connector.

10. The radio frequency transmission optical module according to claim 9, wherein a width of the first protruding portion in the first direction ranges from 0.1 millimeters to 1.5 millimeters, and a width of the second protruding portion in the first direction ranges from 0.1 millimeters to 1.5 millimeters.

11. The radio frequency transmission optical module according to any one of claims 2 to 9, wherein the substrate body, the first protruding portion, and the second protruding portion are integrally formed.

12. An interface, wherein the interface is configured to connect to the gold finger connector of the radio frequency transmission optical module according to any one of claims 1 to 11, the interface comprises a housing, and the housing forms an accommodating cavity; and
the accommodating cavity comprises a first side wall, the first side wall is provided with a first groove, and when the gold finger connector is mated with the interface, the first protruding portion of the gold finger connector is received in the first groove.

13. The interface according to claim 12, wherein the accommodating cavity comprises a second side wall opposite to the first side wall, the second side wall is provided with a second groove, and when the gold finger connector is mated with the interface, the second protruding portion of the gold finger connector is received in the second groove.

14. The interface according to claim 12 or 13, wherein the interface further comprises a first elastic piece module, a second elastic piece module, and an isolation barrier rib; the first elastic piece module, the second elastic piece module, and the isolation barrier rib are disposed in the accommodating cavity; the isolation barrier rib is disposed between the first elastic piece module and the second elastic piece module; the isolation barrier rib separates the first elastic piece module and the second elastic piece module in different cavities of the accommodating cavity; and when the gold finger connector is mated with the interface, the isolation barrier rib is received in the accommodating groove of the gold finger connector;
the first elastic piece module comprises a plurality of first elastic pieces distributed along a first direction, a first end of the first elastic piece is configured to connect to a circuit board, and a second end of the first elastic piece is configured to abut against the gold finger connector; and
the second elastic piece module comprises a plurality of second elastic pieces distributed along the first direction, a first end of the second elastic piece is configured to connect to the circuit board, and a second end of the second elastic piece is configured to abut against the gold finger connector.

15. The interface according to claim 14, wherein a metal elastic piece is disposed on a surface of the isolation barrier rib.

16. A connector assembly, comprising a gold finger connector and an interface, wherein the gold finger connector comprises a substrate, the substrate comprises a substrate body and a first protruding portion, the substrate body comprises a first side surface, and the first protruding portion is connected to the first side surface; and
the interface comprises a housing, the housing forms an accommodating cavity, the accommodating cavity comprises a first side wall, the first side wall is provided with a first groove, and when the gold finger connector is mated with the interface, the first protruding portion is received in the first groove.

17. The connector assembly according to claim 16, wherein the substrate body comprises a second side surface opposite to the first side surface, the substrate further comprises a second protruding portion, and the second protruding portion is connected to the second side surface; and
the accommodating cavity of the housing further comprises a second side wall opposite to the first side wall, the second side wall is provided with a second groove, and when the gold finger connector is mated with the interface, the second protruding portion is received in the second groove.

18. The connector assembly according to claim 17, wherein the gold finger connector comprises a first gold finger module and a second gold finger module, the substrate body comprises a first surface, the first gold finger module and the second gold finger module are distributed on the first surface along a first direction, the first gold finger module comprises a plurality of signal terminals distributed along the first direction, and the second gold finger module comprises a plurality of signal terminals distributed along the first direction;
the interface further comprises a first elastic piece module, a second elastic piece module, and an isolation barrier rib; the first elastic piece module, the second elastic piece module, and the isolation barrier rib are disposed in the accommodating cavity; the isolation barrier rib is disposed between the first elastic piece module and the second elastic piece module; and the isolation barrier rib separates the first elastic piece module and the second elastic piece module in different cavities of the accommodating cavity;
the first elastic piece module comprises a plurality of first elastic pieces distributed along the first direction, a first end of the first elastic piece is configured to connect to a circuit board, and when the gold finger connector is mated with the interface, a second end of the first elastic piece abuts against the first gold finger module; and
the second elastic piece module comprises a plurality of second elastic pieces distributed along the first direction, a first end of the second elastic piece is configured to connect to the circuit board, and when the gold finger connector is mated with the interface, a second end of the second elastic piece abuts against the second gold finger module.

19. The connector assembly according to claim 18, wherein the substrate body is provided with an accommodating groove, and when the gold finger connector is mated with the interface, the isolation barrier rib is received in the accommodating groove.

20. The connector assembly according to claim 19, wherein a metal elastic piece is disposed on a surface of the isolation barrier rib, an inner wall of the accommodating groove is provided with a metal layer, and when the isolation barrier rib is received in the accommodating groove, the metal elastic piece abuts against the metal layer.

21. The connector assembly according to either of claims 18 and 19, wherein a cross-sectional width of the substrate in the first direction ranges from 9.3 millimeters to 12 millimeters.

22. The connector assembly according to claim 21, wherein a width of the first protruding portion in the first direction ranges from 0.1 millimeters to 1.5 millimeters, and a width of the second protruding portion in the first direction ranges from 0.1 millimeters to 1.5 millimeters.

23. A communication device, wherein the communication device comprises a circuit board and the interface according to any one of claims 12 to 15, and the interface is disposed on the circuit board.
